(19) Europäisches Patentamt
European Patent Office
Office européen des brevets

(11) Veröffentlichungsnummer: **0 269 953 B1**

(12) # EUROPÄISCHE PATENTSCHRIFT

(45) Veröffentlichungstag der Patentschrift: **25.03.92**

(51) Int. Cl.$^5$: **C09B 29/033**, D06P 1/18

(21) Anmeldenummer: **87117077.5**

(22) Anmeldetag: **19.11.87**

Die Akte enthält technische Angaben, die nach dem Eingang der Anmeldung eingereicht wurden und die nicht in dieser Patentschrift enthalten sind.

(54) **Thiophenazofarbstoffe.**

(30) Priorität: **22.11.86 DE 3639942**

(43) Veröffentlichungstag der Anmeldung:
**08.06.88 Patentblatt 88/23**

(45) Bekanntmachung des Hinweises auf die Patenterteilung:
**25.03.92 Patentblatt 92/13**

(84) Benannte Vertragsstaaten:
**CH DE FR GB IT LI**

(56) Entgegenhaltungen:
**DE-A- 2 304 203**
**FR-A- 2 190 883**

**RESEARCH DISCLOSURE, Oktober 1980, Seiten 425-427, Nr. 19826, Industrial Opportunities Ltd, Kenneth Mason Publication - Homewell, Havant. Hants. GB**

**The Chemistry of Heterocyclic Compounds - Thiophene and its derivatives, Interscience Publ. 1952; z. Chem.7, 186 (1967); Chem. Ber.101, 1933 (1968);Chem. Ber.98, 3571 (1965); z. Chem.2, 305 (1962)**

**D E Wolf, K Folkers "The preparation of Thiophenes and Tetrahydrothiophenes" Org. React.6, 410-468 (1951)**

(73) Patentinhaber: **BASF Aktiengesellschaft**
**Carl-Bosch-Strasse 38**
**W-6700 Ludwigshafen(DE)**

(72) Erfinder: **Etzbach, Karl-Heinz, Dr.**
**Carl-Bosch-Ring 55**
**W-6710 Frankenthal(DE)**
Erfinder: **Hansen, Günter, Dr.**
**Alwin-Mittasch-Platz 8**
**W-6700 Ludwigshafen(DE)**
Erfinder: **Loeffler, Hermann**
**Haydnstrasse 23**
**W-6720 Speyer(DE)**
Erfinder: **Reichelt, Helmut, Dr.**
**Weinbachstrasse 20**
**W-6701 Niederkirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 269 953 B1

## Beschreibung

Die vorliegende Erfindung betrifft neue Thiophenazofarbstoffe, deren Diazokomponente von Thiophenderivaten stammt, die in Ringposition 3 Carbonylgruppen enthaltende Reste oder Cyano aufweisen, sowie ihre Verwendung zum Färben von Fasermaterial.

Aus der DE-A-3 517 365 sind Azofarbstoffe bekannt, deren Diazokomponente sich von 2-Aminothiophenderivaten ableitet. Auch die DE-A-2 304 203 und die FR-A-2 190 883 beschreiben Azofarbstoffe, die eine Diazokomponente aus der 2-Aminothiophenreihe aufweisen. Schließlich wird in Research Disclosure 10/1980, Seiten 425 bis 427, eine allgemeine Strukturformel eines Azofarbstoffs wiedergegeben, dessen Diazokomponente sich von einem 2-Aminothiophenderivat ableitet und dessen Kupplungskomponente aus der Anilinreihe stammt.

Aufgabe der vorliegenden Erfindung war es, neue Azofarbstoffe auf Thiophenbasis bereitzustellen, die vorteilhafte anwendungstechnische Eigenschaften besitzen.

Es wurden nun neue Thiophenazofarbstoffe der Formel I

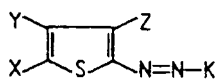 (I)

gefunden, in der

X Carboxyl, Cyano, Nitro, Chlor, Brom, $C_1$-$C_{10}$-Alkanoyl, gegebenenfalls durch Cyano, $C_1$-$C_{12}$-Alkyl, Chlor, Brom oder Nitro substituiertes Benzoyl, $C_1$-$C_4$-Alkylsulfonyl, gegebenenfalls durch Cyano, $C_1$-$C_{12}$-Alkyl, Chlor, Brom oder Nitro substituiertes Phenylsulfonyl oder den Rest CO-OR$^1$ oder

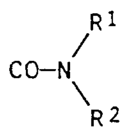 ,

wobei $R^1$ und $R^2$ gleich oder verschieden sind und unabhängig voneinander jeweils für gegebenenfalls durch Hydroxy, $C_1$-$C_4$-Alkoxy, Phenoxy oder Phenyl substituiertes $C_1$-$C_{12}$-Alkyl, $C_5$-$C_7$-Cycloalkyl, $C_3$-$C_4$-Alkenyl, gegebenenfalls durch Cyano, $C_1$-$C_{12}$-Alkyl, Chlor, Brom oder Nitro substituiertes Phenyl oder zusammen mit dem sie verbindenden Stickstoffatom für einen 5- oder 6-gliedrigen, gesättigten heterocyclischen Rest stehen, und $R^2$ zusätzlich auch die Bedeutung von Wasserstoff besitzen kann,

Y Carboxyl, Cyano, den Rest CO-OR$^1$ oder

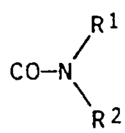 ,

wobei $R^1$ und $R^2$ jeweils die obengenannte Bedeutung besitzen, oder zusammen mit dem Substituenten X den Rest

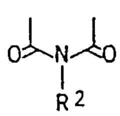 oder 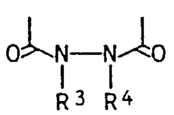 ,

wobei $R^2$ die obengenannte Bedeutung besitzt und $R^3$ und $R^4$ gleich oder verschieden sind und unabhängig voneinander jeweils für Wasserstoff, gegebenenfalls durch Hydroxy, $C_1$-$C_4$-Alkoxy, Phenoxy oder Phenyl substituiertes $C_1$-$C_{12}$-Alkyl, $C_5$-$C_7$-Cycloalkyl oder gegebenenfalls durch

Cyano, $C_1$-$C_{12}$-Alkyl, Chlor, Brom oder Nitro substituiertes Phenyl stehen,

Z Carboxyl, Cyano, $C_1$-$C_{10}$-Alkanoyl, gegebenenfalls durch Cyano, $C_1$-$C_{12}$-Alkyl, Chlor, Brom oder Nitro substituiertes Benzoyl, $C_1$-$C_4$-Alkylsulfonyl, gegebenenfalls durch Cyano, $C_1$-$C_{12}$-Alkyl, Chlor, Brom oder Nitro substituiertes Phenylsulfonyl oder den Rest CO-OR$^1$ oder

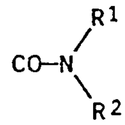
,

wobei $R^1$ und $R^2$ jeweils die obengenannte Bedeutung besitzen, und

K den Rest einer Kupplungskomponente bedeuten,

mit der Maßgabe, daß die Reste X, Y und Z nicht gleichzeitig für Cyano oder den Rest CO-OR$^1$, in dem $R^1$ die oben genannte Bedeutung besitzt, stehen.

Alle in der obengenannten Formel I auftretenden Alkylgruppen können sowohl geradkettig als auch verzweigt sein.

Als Substituenten für die in den Resten X, Y und Z genannten substituierten $C_1$-$C_{12}$-Alkylreste kommen jeweils Hydroxy, $C_1$-$C_4$-Alkoxy, Phenoxy oder Phenyl in Betracht.

Wenn in der obengenannten Formel I durch $C_1$-$C_{12}$-Alkyl substituierte Phenylgruppen auftreten, kommt dabei insbesondere $C_1$-$C_4$-Alkyl als Substituent in Betracht.

Für den Fall, daß in Formel I die Reste X, Y oder Z die Struktur CO-OR$^1$ oder

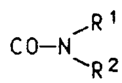

aufweisen, oder daß die Reste X und Y zusammen für die Strukturelemente

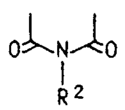
oder
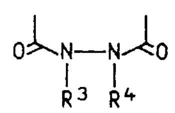

stehen, sind einzelne Reste $R^1$, $R^2$, $R^3$ und $R^4$ beispielsweise Wasserstoff (gilt allerdings nicht im Fall $R^1$), Methyl, Ethyl, Propyl, Isopropyl, Butyl, Isobutyl, sec-Butyl, Pentyl, Hexyl, Heptyl, Octyl, 2-Ethylhexyl, Nonyl, Decyl, Undecyl, Dodecyl; 2-Hydroxyethyl, 2-Hydroxypropyl, 3-Hydroxypropyl, 4-Hydroxybutyl; 2-Methoxyethyl, 2-Ethoxyethyl, 2-Propoxyethyl, 2-Isopropoxyethyl, 2-Butoxyethyl, 3-Methoxypropyl, 3-Ethoxypropyl, 4-Methoxybutyl, 4-Ethoxybutyl; 2-Phenoxyethyl, 2-Phenoxypropyl, 3-Phenoxypropyl, 4-Phenoxybutyl; Benzyl, 2-Phenylethyl; Cyclopentyl, Cyclohexyl, Cycloheptyl; Phenyl; 2-Methylphenyl, 4-Methylphenyl, 4-Ethylphenyl, 4-Isopropylphenyl, 4-Butylphenyl, 4-(2-Ethylhexyl)phenyl, 4-Dodecylphenyl, 2,4-Dimethylphenyl, 2,4,6-Trimethylphenyl; 4-Cyanophenyl, 4-Chlorphenyl, 2,4-Dichlorphenyl, 2-Bromphenyl; 3-Nitrophenyl oder 4-Nitrophenyl.

Weitere Reste $R^1$ und $R^2$ sind beispielsweise Prop-2-en-1-yl, 2-Methylprop-2-en-1-yl, But-2-en-1-yl oder But-3-en-1-yl.

Wenn $R^1$ und $R^2$ zusammen mit dem sie verbindenden Stickstoffatom für einen 5- oder 6-gliedrigen, gesättigten heterocyclischen Rest stehen, sind z.B. folgende Reste zu nennen: Pyrrolidino, Piperidino, Morpholino oder N-($C_1$-$C_4$-Alkyl)piperazino, wie N-Methyl- oder N-Ethylpiperazino.

Weitere Reste X und Z sind beispielsweise Formyl, Acetyl, Propionyl, Butyryl, Isobutyryl, Pentanoyl, Hexanoyl, Heptanoyl, Octanoyl, 2-Ethylhexanoyl, Nonanoyl, Decanoyl; Benzyol, 2-Methylbenzoyl, 4-Methylbenzoyl, 4-Ethylbenzoyl, 4-Butylbenzoyl, 4-(2-Ethylhexyl)benzoyl, 4-Dodecylbenzoyl, 2,4-Dimethylbenzoyl; 4-Cyanobenzoyl; 4-Chlorbenzoyl, 2-Brombenzoyl, 2,4-Dichlorbenzoyl; 3- oder 4-Nitrobenzoyl; Methylsulfonyl, Ethylsulfonyl, Propylsulfonyl, Isopropylsulfonyl, Butylsulfonyl, Isobutylsulfonyl; Phenylsulfonyl; 2-Methylphenylsulfonyl, 4-Methylphenylsulfonyl; 4-Chlorphenylsulfonyl oder 4-Bromphenylsulfonyl.

In Formel I bedeutet K den Rest einer Kupplungskomponente. Solche Komponenten gehorchen der

Formel KH und stammen aus der Anilin-, Naphthylamin-, Pyrazolon-, Aminopyrazol-, Indol-, Thiazol-, Thiophen-, Tetrahydrochinolin-, Pyridon- oder Diaminopyridinreihe.

Insbesondere entsprechen sie den allgemeinen Formeln II bis XI:

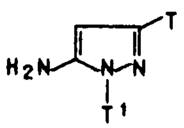 ,
(II)

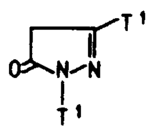 ,
(III)

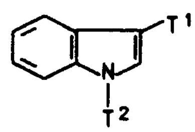 ,
(IV)

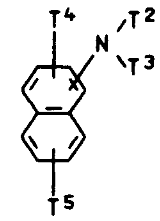 ,
(V)

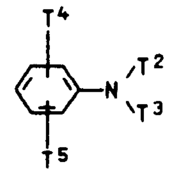 ,
(VI)

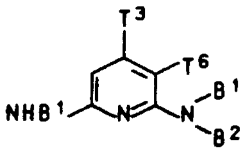 ,
(VII)

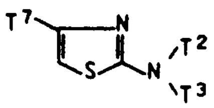 ,
(VIII)

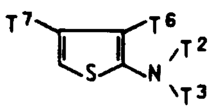 ,
(IX)

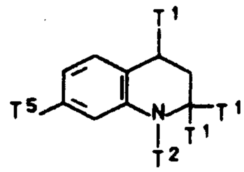
(X)

oder 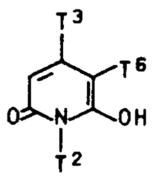 (XI).

In diesen Formeln bedeuten:

- B[1] und B[2] — unabhängig voneinander Wasserstoff, jeweils gegebenenfalls substituiertes $C_1$-$C_8$-Alkyl, $C_5$-$C_7$-Cycloalkyl oder Phenyl, $C_3$-$C_6$-Alkenyl oder Acyl,
- T[1] — Wasserstoff, gegebenenfalls durch Phenyl substituiertes $C_1$-$C_4$-Alkyl, oder gegebenenfalls substituiertes Phenyl,
- T[2] — Wasserstoff oder den Rest T[3],
- T[3] — gegebenenfalls substituiertes $C_1$-$C_6$-Alkyl, $C_5$-$C_7$-Cycloalkyl, $C_3$-$C_6$-Alkenyl oder Phenyl,
- T[4] und T[5] — unabhängig voneinander Wasserstoff, $C_1$-$C_4$-Alkyl, $C_1$-$C_4$-Alkoxy, Phenoxy, Benzyloxy, Halogen, $C_1$-$C_4$-Alkylsulfonylamino, $C_1$-$C_4$-Dialkylaminosulfonylamino, $C_1$-$C_4$-Alkoxycarbonylamino, gegebenenfalls substituiertes Benzoylamino oder $C_1$-$C_6$-Alkanoylamino,
- T[6] — Cyano, Nitro, Carbamoyl, $C_1$-$C_4$-Mono- oder Dialkylcarbamoyl, $C_1$-$C_4$-Alkoxycarbonyl oder $C_1$-$C_4$-Alkoxyethoxycarbonyl und
- T[7] — gegebenenfalls durch Cyano, $C_1$-$C_4$-Alkoxycarbonyl oder Phenyl substituiertes $C_1$-$C_{10}$-Alkyl, Phenyl, Halogen, Nitro, gegebenenfalls durch $C_1$-$C_4$-Alkoxy substituiertes $C_1$-$C_{10}$-Alkoxy, Phenoxy, Benzyloxy, $C_1$-$C_4$-Alkylthio, Phenylthio, $C_1$-$C_4$-Mono- oder Dialkylamino, $C_1$-$C_5$-Alkanoylamino oder $C_1$-$C_4$-Alkoxycarbonyl.

Für den Fall, daß der Rest B[2] für substituiertes $C_1$-$C_8$ Alkyl steht, kommen Chlor, Brom, Hydroxy, $C_1$-$C_8$-Alkoxy, Phenoxy, gegebenenfalls substituiertes Phenyl, Cyano, Carboxyl, $C_1$-$C_8$-Alkanoyloxy, $C_1$-$C_8$-Alkanoyloxy-$C_1$-$C_4$-alkoxy, $C_1$-$C_8$-Akoxy-$C_1$-$C_4$-alkoxy, Benzoyloxy, o-, m- oder p-Methylbenzoyloxy, o-, m- oder p-Chlorobenzoyloxy, $C_1$-$C_8$-alkanoyloxy, Phenoxy-$C_1$-$C_8$-alkanoyloxy, $C_1$-$C_{18}$-Alkoxycarbonyloxy, $C_1$-$C_{18}$-Alkoxy-$C_1$-$C_8$-alkoxycarbonyloxy, Benzyloxycarbonyloxy, Phenethoxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_8$-Alkoxy-$C_1$-$C_8$-alkoxycarbonyl, Phenoxycarbonyl, Benzyloxycarbonyl, Phenoxy-$C_1$-$C_4$-alkoxy oder Phenylethoxycarbonyl als Substituenten in Betracht.

Für den Fall, daß der Rest B[2] für substituiertes $C_5$-$C_7$-Cycloalkyl steht, kommen $C_1$-$C_4$-Alkyl, $C_1$-$C_4$-Alkoxy, $C_2$-$C_4$-Hydroxyalkyl oder Hydroxy als Substituenten in Betracht.

Für den Fall, daß der Rest B[2] für Acyl steht, ist unter Acyl jeweils gegebenenfalls substituiertes Benzoyl

oder Phenylsulfonyl, gegebenenfalls durch Phenyl substituiertes $C_1$-$C_{10}$-Alkanoyl oder $C_1$-$C_6$-Alkylsulfonyl zu verstehen.

Einzelne Reste $B^2$ sind beispielsweise:

$CH_3$, $C_2H_5$, $C_3H_7$, $CH(CH_3)_2$, $C_4H_9$, $CH_2CH(CH_3)_2$, $\underset{\substack{|\\CH_3}}{CH}-C_2H_5$, $C_5H_{11}$,

$CH(C_2H_5)_2$, $\overset{\substack{CH_3\\|}}{CH}-C_3H_7$, $\underset{\substack{|\\CH_3}}{CH}-\underset{\substack{|\\CH_3}}{CH}-CH_3$, $C_2H_4-CH(CH_3)_2$, $CH_2-\overset{\substack{CH_3\\|}}{\underset{\substack{|\\CH_3}}{C}}-CH_3$,

$C_6H_{13}$, $C_7H_{15}$, $\underset{\substack{|\\C_2H_5}}{CH}-C_4H_9$, $CH\begin{smallmatrix}/CH(CH_3)_2\\ \backslash CH(CH_3)_2\end{smallmatrix}$, $\underset{\substack{|\\CH_3}}{CH}-C_2H_4-CH(CH_3)_2$, $C_8H_{17}$,

$CH_2-\underset{\substack{|\\C_2H_5}}{CH}-C_4H_9$ und $\underset{\substack{|\\CH_3}}{CH}-C_3H_6-CH(CH_3)_2$, $C_2H_4OH$, $C_3H_6OH$, $CH_2-\underset{\substack{|\\CH_3}}{CH}-OH$, $\underset{\substack{|\\CH_3}}{CH}-CH_2-OH$,

$C_4H_8OH$, $\overset{\substack{CH_3\\|}}{CH}-C_2H_4-OH$, $\overset{\substack{CH_3\\|}}{CH}-CH_2-OH$, $C_6H_{12}OH$, $\underset{\substack{|\\CH_3}}{CH}-C_3H_6\underset{\substack{|\\OH}}{C}(CH_3)_2$, $C_2H_4OCH_3$,

$C_2H_4OC_2H_5$, $C_2H_4OC_3H_7$, $C_2H_4OC_4H_9$, $C_2H_4OC_6H_5$, $C_2H_4OC_6H_{11}$, $C_2H_4CN$,

$C_5H_{10}CN$, $C_6H_{12}CN$, $C_2H_4OC_2H_4CN$, $C_3H_6OC_2H_4CN$, $C_3H_6OCH_3$, $C_3H_6OC_2H_5$,

$C_3H_6OC_3H_7$, $C_3H_6OC_4H_9$, $C_3H_6OCH_2-\overset{\substack{C_2H_5\\|}}{CH}-C_4H_9$, $C_3H_6OC_6H_{11}$, $C_3H_6OC_8H_{17}$,

$C_3H_6OCH_2C_6H_5$, $C_3H_6OC_2H_4C_6H_5$, $C_3H_6OC_2H_4OC_6H_5$, $C_3H_6OC_6H_5$, $C_3H_6OC_2H_4OH$,

$C_3H_6OC_4H_8OH$, $C_3H_6OC_2H_4OCH_3$, $C_3H_6OC_2H_4OC_2H_5$, $C_3H_6OC_2H_4OCH(CH_3)_2$,

$C_3H_6OC_2H_4OC_4H_9$, $C_3H_6OC_2H_4OCH_2C_6H_5$, $C_3H_6OC_2H_4OC_6H_5$, $C_3H_6OC_4H_8OCH_3$,

$C_3H_6OC_4H_8OC_2H_5$, $C_3H_6OC_4H_8OC_4H_9$, $\underset{\substack{|\\CH_3}}{CH}-CH_2OCH_3$, $\underset{\substack{|\\CH_3}}{CH}CH_2OC_4H_9$, $\underset{\substack{|\\CH_3}}{CH}-CH_2OC_6H_5$,

$\underset{\substack{|\\CH_3}}{CH}CH_2OCH_2C_6H_5$, $\underset{\substack{|\\CH_3}}{CH}-C_2H_4OCH_3$, $\underset{\substack{|\\C_2H_5}}{CH}-CH_2-OCH_3$, $\underset{\substack{|\\CH_3}}{CH}-CH(OCH_3)_2$, $CH_2\underset{\substack{|\\CH_3}}{CH}OCH_3$,

$CH_2-\underset{\substack{|\\CH_3}}{CH}-OC_2H_5$, $CH_2-\underset{\substack{|\\CH_3}}{CH}-OC_4H_9$ , $CH_2-\underset{\substack{|\\CH_3}}{CH}-OC_6H_5$

$C_3H_6O\underset{\substack{|\\CH_3}}{CH}-CH_2OCH_3$, $C_3H_6O\underset{\substack{|\\CH_3}}{CH}OC_2H_5$, $CH_3H_6OCH_2\underset{\substack{|\\CH_3}}{CH}OCH_3$,

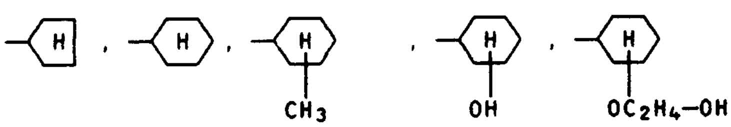 , $CH_2-C_6H_5$, $C_2H_4-C_6H_5$,

$CH_2\overset{CH_3}{\overset{|}{C}}H-C_6H_5$, $\overset{CH_3}{\overset{|}{C}}HC_2H_4-C_6H_5$, $C_2H_4\overset{CH_3}{\overset{|}{C}}H-C_6H_5$, $CH_2\underset{OH}{\underset{|}{C}}H-C_6H_5$, $\overset{C_2H_5}{\overset{|}{C}}H-C_6H_5$ oder $\overset{C_3H_7}{\overset{|}{C}}H-C_6H_5$

$CH_2-C_6H_4-CH_3$, $CH_2-C_6H_4-OCH_3$, $C_2H_4-C_6H_4-CH_3$, $C_2H_4-C_6H_4-OCH_3$,

$C_6H_5$, $C_6H_4CH_3$, $C_6H_3(CH_3)_2$, $C_6H_4OCH_3$, $C_6H_3(OCH_3)_2$, $C_6H_4Cl$, $C_6H_2(OCH_3)_2Cl$,

$CH_2CH{=}CH_2$, $CH_2COOCH_3$, $(CH_2)_5COOCH_3$, $(CH_2)_5COOC_2H_5$, $(CH_2)_5COOC_4H_9$,

$(CH_2)_5COOCH_2\overset{C_2H_5}{\underset{C_4H_9}{CH}}$, $(CH_2)_2OCHO$, $(CH_2)_2OCO(CH_2)_nCH_3$, $(C_2H_4O)_2CHO$,

$(C_2H_4O)_2CO(CH_2)_nCH_3$, $(CH_2)_3O(CH_2)_2OCHO$, $(CH_2)_3O(CH_2)_2OCO(CH_2)_nCH_3$,

$(CH_2)_2O(CH_2)_4OCHO$, $(CH_2)_2O(CH_2)_4OCO(CH_2)_nCH_3$ (wobei n die Zahl 0 bis 7 bedeuteten kann), $(CH_2)_2OCOCH\genfrac{}{}{0pt}{}{C_2H_5}{C_4H_9}$, $(CH_2)_2OCOC_6H_5$, $(CH_2)_2OCOC_6H_4CH_3$,

$(CH_2)_2OCOC_6H_4Cl$, $(CH_2)_2OCONHCH_3$, $(CH_2)_2OCONHC_4H_9$, $(CH_2)_2OCONHCH_2CH\genfrac{}{}{0pt}{}{C_2H_5}{C_4H_9}$,

$(CH_2)_2OCONHC_6H_5$, $CHO$, $CH_3CO$, $C_2H_5CO$, $C_3H_7CO$, $C_4H_9CO$, $C_5H_{11}CO$, $C_6H_{13}CO$,

$C_7H_{15}CO$, $C_8H_{17}CO$, $C_9H_{19}CO$, $C_{10}H_{21}CO$, $C_6H_5CO$, $CH_3C_6H_4CO$, $C_6H_5CH_2CO$, $CH_3SO_2$,

$C_2H_5SO_2$, $C_6H_5SO_2$ oder $CH_3C_6H_4SO_2$.

Einzelne Reste $T^1$ sind beispielsweise Wasserstoff, Methyl, Ethyl, Propyl, Butyl, Benzyl, Phenethyl, Phenyl, o-, m-, p-Tolyl oder o-, m-, p-Chlorphenyl.

Für den Fall, daß der Rest $T^3$ für substituiertes $C_1$-$C_6$-Alkyl steht kommen Chlor, Brom, Hydroxy, $C_1$-$C_8$-Alkoxy, Phenoxy, Cyano, Carboxy, Phenyl, $C_1$-$C_8$-Alkanoyloxy, $C_1$-$C_8$-Alkoxy-$C_1$-$C_4$-alkoxy, Benzoyloxy, o-, m-, p-Methylbenzoyloxy, o-, m-, p-Chlorbenzoyloxy, $C_1$-$C_8$-Alkoxy-$C_1$-$C_8$-alkanoyloxy, Phenoxy-$C_1$-$C_8$-alkanoyloxy, $C_1$-$C_8$-Alkoxycarbonyloxy, $C_1$-$C_8$-Alkoxy-$C_1$-$C_8$-alkoxycarbonyloxy, Benzyloxycarbonyloxy, Phenethyloxycarbonyloxy, Phenoxyethoxycarbonyloxy, $C_1$-$C_8$-Alkylaminocarbonyloxy, Cyclohexylaminocarbonyloxy, Phenylaminocarbonyloxy, $C_1$-$C_8$-Alkoxycarbonyl, $C_1$-$C_8$-Alkoxy-$C_1$-$C_8$-alkoxycarbonyl, Phenoxycarbonyl, Benzyloxycarbonyl, Phenoxy-$C_1$-$C_4$-alkoxy oder Phenethyloxycarbonyl als Substituenten in Betracht.

Einzelne Reste $T^3$ sind z.B. Methyl, Ethyl, Propyl, Butyl, Pentyl, Hexyl, Allyl, Methallyl, 2-Chlorethyl, 2-Bromethyl, 2-Cyanoethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonyloxyethyl,

2-Benzoyloxyethyl, Cyclopentyl, Cyclohexyl, Cycloheptyl, Benzyl, Phenylethyl oder Phenyl.

Als Reste $T^4$ und $T^5$ kommen beispielsweise Wasserstoff, Methyl, Ethyl, Propyl, Brom, Chlor, Methoxy, Ethoxy, Phenoxy, Benzyloxy, Methylsulfonylamino, Ethylsulfonylamino, Isopropylsulfonylamino, Butylsulfonylamino, Dimethylaminosulfonylamino, Diethylaminosulfonylamino, Methoxycarbonylamino, Ethoxycarbonylamino, Propoxycarbonylamino, Isobutoxycarbonylamino, Formylamino, Acetylamino, Propionylamino, Butyrylamino, Pentanoylamino, Hexanoylamino, Benzoylamino, 4-Methylbenzoylamino, 4-Chlorbenzoylamino oder 2-Methoxybenzoylamino in Betracht.

Reste $T^6$ sind neben den bereits genannten z.B. Carbamoyl, Methylcarbamoyl, Dimethylcarbamoyl, Ethylcarbamoyl, Diethylcarbamoyl, Methoxycarbonyl, Ethoxycarbonyl, n- oder i-Propoxycarbonyl, n-, i- oder sec-Butoxycarbonyl, Methoxyethoxycarbonyl, Ethoxyethoxycarbonyl, n- oder i-Propoxyethoxycarbonyl oder n-, i- oder sec-Butoxyethoxycarbonyl.

Reste $T^7$ sind beispielsweise Methyl, Ethyl, Propyl, Isopropyl, Butyl, Isobutyl, sec-Butyl, tert-Butyl, Pentyl, Hexyl, Heptyl, Octyl, 2-Ethylhexyl, Nonyl, Decyl, Cyanomethyl, Methoxycarbonylmethyl, Ethoxycarbonylmethyl, Benzyl, Phenylethyl, Phenyl, Chlor, Brom, Nitro, Methoxy, Ethoxy, Propoxy, Isopropoxy, Butoxy, Isobutoxy, Pentyloxy, Hexyloxy, Heptyloxy, 2-Ethylhexyloxy, Nonyloxy, Decyloxy, 2-Methoxyethoxy, 2-Ethoxyethoxy, 2-Propoxyethoxy, 2-Butoxyethoxy, Phenoxy, Benzyloxy, Methylthio, Ethylthio, Propylthio, Butylthio, Isobutylthio, sec-Butylthio, Phenylthio, Methylamino, Dimethylamino, Ethylamino, Diethylamino, Propylamino, Dipropylamino, Isopropylamino, Diisopropylamino, Butylamino, Dibutylamino, Methyl-ethylamino, Formylamino, Acetylamino, Propionylamino, Butyrylamino, Pentanoylamino, Methoxycarbonyl, Ethoxycarbonyl, Propoxycarbonyl, Isopropoxycarbonyl, Butoxycarbonyl, Isobutyoxycarbonyl, sec-Butoxycarbonyl oder tert-Butoxycarbonyl.

Besonders bevorzugt sind Thiophenfarbstoffe der Formel I, in der X Cyano, Nitro, Chlor, Brom, $C_1$-$C_5$-Alkanoyl oder den Rest CO-OR$^1$, in dem $R^1$ für $C_1$-$C_4$-Alkyl oder Phenyl steht, Y und Z gleich oder verschieden sind und unabhängig voneinander jeweils Cyano oder den Rest CO-OR$^1$, in dem $R^1$ für $C_1$-$C_4$-Alkyl steht, und K den Rest einer Kupplungskomponente der Anilin-, Aminopyrazol-, Diaminopyridin-, Pyridon-, Thiazol- oder Thiophenreihe bedeuten. Die Kupplungskomponenten entsprechen dabei der Formel II, VI, VII, VIII, IX oder XI.

Insbesondere sind solche Thiophenazofarbstoffe der Formel I zu nennen, in der X Cyano, Nitro, Formyl, Acetyl oder den Rest CO-OR$^1$, in dem $R^1$ für $C_1$-$C_4$-Alkyl steht, Y und Z gleich oder verschieden sind und unabhängig voneinander jeweils Cyano oder den Rest CO-OR$^1$, in dem $R^1$ für $C_1$-$C_4$-Alkyl steht, und K eine Kupplungskomponente der Diaminopyridin-, Thiazol- oder Thiophenreihe bedeuten. Die Kupplungskomponenten entsprechen dabei der Formel VII, VIII oder IX.

Zur Herstellung der erfindungsgemäßen Thiophenazofarbstoffe der Formel I kann man eine nach an sich bekannten Verfahren erhältliche Diazoniumverbindung von Aminen der Formel II

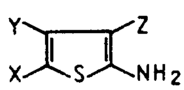 (II),

in der X, Y und Z jeweils die obengenannte Bedeutung besitzen, mit einer Kupplungskomponente HK, wie sie oben beschrieben ist, nach an sich bekannten Methoden umsetzen.

2-Aminothiophene der Formel II sind bereits zum Teil bekannt und in der EP-A-150 034 beschrieben.

Weitere 2-Aminothiophene können analog zu der in der EP-A-150 034 genannten Herstellungsweise durch an sich bekannte elektrophile Subkstitutionsreaktionen an Thiophenderivaten der Formel III

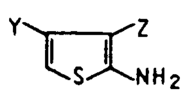 (III),

in der Y und Z jeweils die obengenannte Bedeutung besitzen, erhalten werden.

Weiterhin ist beispielsweise in Annali di Chimica 64, 833 (1974) die Herstellung von 2-Amino-3-cyano-4-ethoxycarbonyl-5-acetylthiophen beschrieben.

Weitere Einzelheiten der Herstellung können den Beispielen entnommen werden.

Die erfindungsgemäßen Farbstoffe sind gelb bis blau und zeichnen sich durch gute Echtheiten aus. Sie eignen sich zum Färben von Fasermaterial, vorzugsweise von synthetischen Polyestern, Celluloseestern oder Mischgeweben aus Polyestern und Cellulosefasern.

Bei geeigneter Konstitution sind die Farbstoffe unter reduzierenden und/oder unter alkalischen und reduzierenden Bedingungen nach an sich bekannten Methoden, wie sie in der GB-A-1 543 724 und GB-A-2 071 707 beschrieben sind, ätzbar.

Die nachfolgenden Beispiele sollen die Erfindung näher erläutern. Dabei beziehen sich die Angaben über Prozente, sofern nicht anders vermerkt, jeweils auf das Gewicht.

Beispiel 1

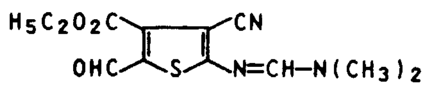

Man legte 50 g N,N-Dimethylformamid vor und tropfte unter Eiskühlung bei 5 bis 10 ° C 11,5 g Phosphoroxytrichlorid zu. Die Mischung ließ man noch eine halbe Stunde bei 5 bis 10 ° C rühren, dann trug man 4,5 g 2-Amino-3-cyano-4-ethoxycarbonylthiophen ein. Man rührte das Gemisch noch 3 Stunden bei 70 ° C und gab es dann auf eine verdünnte wässrige Natriumacetatlösung. Das Produkt fiel nach mehrstündigem Rühren kristallin aus. Es wurde abgesaugt, mit Wasser gewaschen und getrocknet. Man erhielt 4,6 g (66 % d. Th.) N,N-Dimethyl-N′-(3-cyano-4-ethoxycarbonyl-5-formylthien-2-yl)formamidin.
Schmp.: 155 ° C (aus Eissesig)
IR (KBr): 2221, 1716, 1652, 1626 $cm^{-1}$.

Beispiel 2

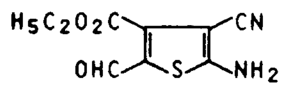

11,8 g N,N-Dimethyl-N′-(3-cyano-4-ethoxycarbonyl-5-formylthien-2-yl)formamidin wurden in einer Mischung aus 100 g Ethanol und 10 g konz. Salzsäure eine halbe Stunde zum Sieden erhitzt. Nach dem Abkühlen auf Raumtemperatur wurde das Produkt abgesaugt, mit Wasser gewaschen und getrocknet. Man erhielt 6 g (68 % d. Th.) 2-Amino-3-cyano-4-ethoxycarbonyl-5-formylthiophen.
Zers.-P.: 240 ° C (aus iso-Propanol)
IR (KBr): 3315, 3200, 2210, 1715, 1621 $cm^{-1}$.

Beispiel 3

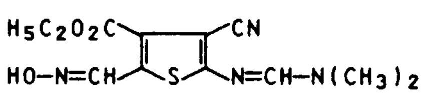

Man rührte eine Mischung aus 2,79 g N,N-Dimethyl-N′-(3-cyano-4-ethoxycarbonyl-5-formylthien-2-yl)-formamidin, 0,7 g Hydroxylamin-hydrochlorid, 0,82 g Natriumacetat und 20 g N,N-Dimethylformamid 3 Stunden bei 50 ° C. Dann fällte man auf Wasser, saugte den Niederschlag ab und trocknete ihn. Man erhielt 2,8 g (95 % d. Th.) N,N-Dimethyl-N′-(3-cyano-4-ethoxycarbonyl-5-[N-hydroxy-formamidyl]-thien-2-yl)-formamidin.
Schm.: 188 ° C
IR (KBr): 3285, 2219, 1709, 1627 $cm^{-1}$.

Beispiel 4

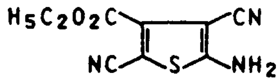

In 30 g N,N-Dimethylformamid wurden unter Eiskühlung 1,7 g Phosphoroxytrichlorid gegeben, anschließend rührte man die Mischung noch eine halbe Stunde bei 5 bis 10 ° C und trug dann 2,94 g N,N-Dimethyl-N'-(3-cyano-4-ethoxycarbonyl-5-[N-hydroxy-formimidyl]-thien-2-yl)formamidin ein. Die Lösung wurde 2 Stunden bei 50 ° C gerührt und dann in 200 ml Wasser gegeben. Das ausgefallene N,N-dimethyl-N'-(3,5-dicyano-4-ethoxycarbonylthien-2-yl)formamidin wurde abgesaugt, mit Wasser gewaschen, scharf abgesaugt und dann in eine Mischung aus 30 g Ethanol und 3 g konz. Salzsäure gegeben.

Dieses Gemisch wurde 1 Stunde zum Sieden erhitzt und anschließend nach dem Abkühlen auf eine verdünnte wässrige Natriumacetatlösung gegeben. Der Niederschlag wurde abgesaugt, mit Wasser gewaschen und getrocknet. Man erhielt 1.8 g (81 % d. Th.) 2-Amino-3,5-dicyano-4-ethoxycarbonylthiophen.
Schm.: 200 ° C (aus Ethanol/Wasser)
IR (KBr): 3366, 3301, 3196, 2215, 1731, 1643 $cm^{-1}$.

Beispiel 5

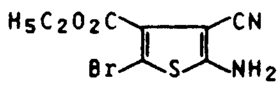

Zu einer Mischung aus 4,9 g 2-Amino-3-cyano-4-ethoxycarbonylthiophen und 50 g Eisessig wurden bei Raumtemperatur 4,2 g Brom zugetropft und das Gemisch anschließend noch 5 Stunden bei Raumtemperatur nachgerührt. Dann gab man es auf Wasser, setzte 4 g einer konz. Natriumbisulfitlösung zu, saugte das Produkt ab, wusch es mit Wasser und trocknete es. Man erhielt 5,8 g (84 % d. Th.) 2-Amino-5-brom-3-cyano-4-ethoxycarbonylthiophen.
Schm.: 170 ° C (aus Chlorbenzol)
IR (KBr): 3422, 3403, 3316, 3215, 2207, 1703, 1631 $cm^{-1}$.

In analoger Weise werden die in Tabelle 1 aufgeführten Verbindungen der Formel

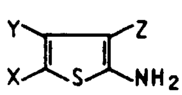

hergestellt.

Tabelle 1

| Bsp. Nr. | X | Y | Z |
|---|---|---|---|
| 6 | $NO_2$ | $CO_2C_2H_5$ | CN |
| 7 | CHO | $CO_2CH_3$ | CN |
| 8 | Br | $CO_2CH_3$ | CN |
| 9 | $NO_2$ | $CO_2CH_3$ | CN |
| 10 | CN | $CO_2CH_3$ | CN |
| 11 | CN | $CO_2C_4H_9$ | CN |
| 12 | CHO | $CO_2C_4H_9$ | CN |
| 13 | $NO_2$ | $CO_2C_4H_9$ | CN |

Beispiel 14

6,7 g 2-Amino-3-cyano-4,5-diethoxycarbonylthiophen wurden in 200 ml Eisessig/Propionsäure (3:1) und 30 ml $H_2SO_4$ (85 %ig) angerührt. Bei 0 bis 5 °C wurden 8,3 g 40 %ige Nitrosylschwefelsäure langsam zugetropft. Man rührte noch 4 Stunden bei 0 bis 5 °C und tropfte dann die Diazoniumsalzlösung zu 6,0 g 2-(Diethylamino)-4-phenylthiazol in 100 ml N,N-Dimethylformamid, 0,5 g Amidosulfonsäure und 125 g Eis unter Zugabe weiterer 300 g Eis. Man rührte die Farbstoffsuspension 4 Stunden bei 0 bis 5 °C, erwärmte auf 49 °C und saugte dann den Farbstoff der Formel

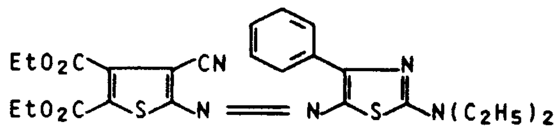

ab, wusch mit Wasser neutral und trocknete.
Ausbeute: 11,4 g, ηmax [$CH_2Cl_2$]: 574 nm.
Der Farbstoff färbt Polyesterfasermaterial in blauen Tönen mit sehr guten Echtheiten.

Die in den nachfolgenden Tabellen 2 bis 5 aufgeführten Farbstoffe werden in analoger Weise erhalten.

Die Farbstoffe der Tabelle 2 entsprechen der Formel

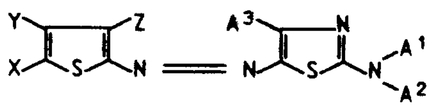

Tabelle 2:

| Bsp. Nr. | X | Y | Z | $A^1$ | $A^2$ | $A^3$ | Nuance auf PES |
|---|---|---|---|---|---|---|---|
| 15 | $CO_2Et$ | $CO_2Et$ | CN | $C_2H_5$ | $C_2H_5$ | 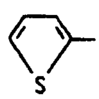 | grünst. blau |
| 16 | $CO_2Et$ | $CO_2Et$ | CN | $C_2H_5$ | $C_2H_5$ | 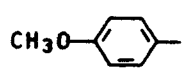 | grünst. blau |
| 17 | $CO_2Et$ | $CO_2Et$ | CN | $C_2H_5$ | n-$C_4H_9$ | 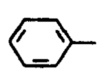 | blau |
| 18 | $CO_2Et$ | $CO_2Et$ | CN | H | 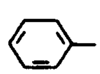 | $CH_3$ | violett |

Tabelle 2: (Forts.)

| Bsp. Nr. | X | Y | Z | $A^1$ | $A^2$ | $A^3$ | Nuance auf PES |
|---|---|---|---|---|---|---|---|
| 19 | $CO_2Et$ | $CO_2Et$ | CN | $C_2H_5$ | $C_2H_5$ | 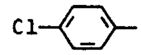 | blau |
| 20 | $CO_2Et$ | $CO_2Et$ | CN | $CH_2CH{=}CH_2$ | $CH_2CH{=}CH_2$ | 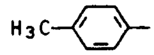 | blau |
| 21 | $CO_2Et$ | $CO_2Et$ | CN | $C_4H_9$ | $C_4H_9$ | 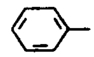 | blau |
| 22 | $CO_2Et$ | $CO_2Et$ | CN | $C_2H_5$ | $C_2H_4CN$ | 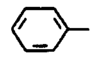 | rotst. blau |
| 23 | $CO_2Et$ | $CO_2Et$ | CN | $CH_3$ | $CH_3$ | 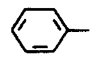 | rotst. blau |
| 24 | $CO_2Et$ | $CO_2Et$ | CN | $C_2H_5$ | 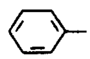 | 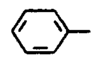 | blau |
| 25 | $CO_2Et$ | CN | CN | H | 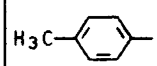 | $CH_3$ | violett |
| 26 | $CO_2Et$ | CN | CN | $CH_3$ | $C_3H_7$ | 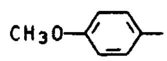 | grünst. blau |
| 27 | $CO_2Et$ | CN | CN | $CH_3$ | 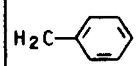 | H | violett |
| 28 | $CO_2Et$ | $CO_2Et$ | CN | $C_2H_5$ | $C_2H_5$ | 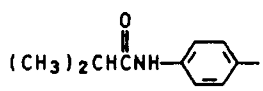 | blau |
| 29 | $CO_2Et$ | $CO_2Et$ | CN | $CH_3$ | 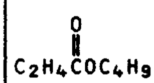 | 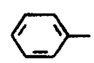 | rotst. blau |
| 30 | $CO_2Et$ | $CO_2Et$ | CN | $CH_2CH{=}CH_2$ | $C_2H_4CO_2CH_3$ | 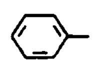 | rotst. blau |
| 31 | $CO_2Me$ | $CO_2Me$ | CN | $C_2H_5$ | $C_2H_5$ | 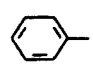 | blau |
| 32 | $CO_2Me$ | $CO_2Me$ | CN | $CH_3$ | $n\text{-}C_3H_7$ | 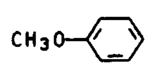 | blau |

Tabelle 2: (Forts.)

| Bsp. Nr. | X | Y | Z | $A^1$ | $A^2$ | $A^3$ | Nuance auf PES |
|---|---|---|---|---|---|---|---|
| 33 | $CO_2Me$ | CN | CN | $C_4H_9$ | $C_4H_9$ | 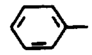 | blau |
| 34 | $CO_2Me$ | CN | CN | H | 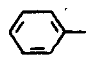 | $CH_3$ | violett |
| 35 | $CO_2Bu$ | $CO_2Bu$ | CN | $C_2H_5$ | $C_4H_9$ | 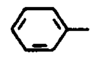 | blau |
| 36 | 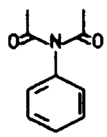 | | CN | $C_2H_5$ | $C_2H_5$ | 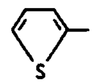 | blau |
| 37 | CHO | $CO_2Et$ | CN | $C_2H_5$ | $C_4H_9$ | 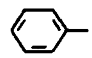 | blau |
| 38 | CHO | $CO_2Et$ | CN | H | 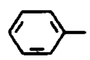 | $CH_3$ | violett |
| 39 | CHO | $CO_2Et$ | CN | $C_2H_5$ | $C_2H_5$ | 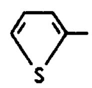 | grünst. blau |
| 40 | CHO | $CO_2Et$ | CN | $C_2H_5$ | $C_2H_5$ | 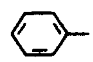 | blau |
| 41 | $CH_3CO$ | $CO_2Et$ | CN | $C_2H_5$ | $C_2H_5$ | 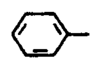 | blau |
| 42 | $CH_3CO$ | $CO_2Et$ | CN | $C_2H_5$ | 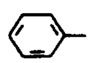 | 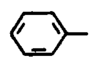 | blau |
| 43 | $CH_3CO$ | $CO_2Et$ | CN | $CH_3$ | $C_3H_7$ | 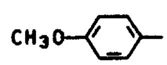 | grünst. blau |
| 44 | CN | $CO_2Et$ | CN | $CH_3$ | $C_3H_7$ | 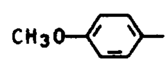 | grünst. blau |
| 45 | CN | $CO_2Et$ | CN | $C_2H_5$ | $C_2H_5$ | 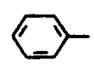 | rotst. blau |
| 46 | $NO_2$ | $CO_2Et$ | CN | $C_2H_5$ | $C_2H_5$ | 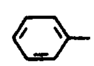 | blau |
| 47 | Br | $CO_2Et$ | CN | $C_2H_5$ | $C_2H_5$ | 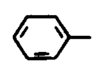 | rot |

Die Farbstoffe der Tabelle 3 entsprchen der Formel

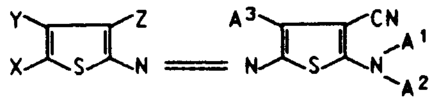

Tabelle 3:

| Bsp. Nr. | X | Y | Z | $-NA^1A^2$ | $A^3$ | Nuance auf PES |
|---|---|---|---|---|---|---|
| 48 | $CO_2Et$ | $CO_2Et$ | CN | 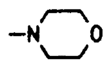 | H | violett |
| 49 | $CO_2Et$ | $CO_2Et$ | CN | 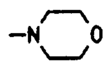 | $CH_3$ | blau-violett |
| 50 | $CO_2Et$ | $CO_2Et$ | CN | $-N(C_2H_5)_2$ | H | rotst. blau |
| 51 | $CO_2Et$ | $CO_2Et$ | CN | 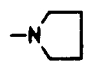 | $C_6H_5$ | blau |
| 52 | $CO_2Et$ | $CO_2Et$ | CN | $-N(C_4H_9)_2$ | H | rotst. blau |
| 53 | CHO | $CO_2Et$ | CN | 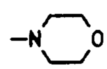 | H | rotst. blau |
| 54 | CHO | $CO_2Et$ | CN | 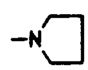 | $CH_3$ | blau |
| 55 | CHO | $CO_2Et$ | CN | $-N(C_2H_5)_2$ | H | blau |
| 56 | CN | $CO_2Et$ | CN | 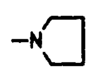 | $CH_3$ | rotst. blau |
| 57 | $NO_2$ | $CO_2Et$ | CN | 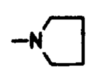 | $CH_3$ | blau |
| 58 | $COCH_3$ | $CO_2Et$ | CN | 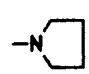 | $CH_3$ | blau |

Die Farbstoffe der Tabelle 4 entsprechen der Formel

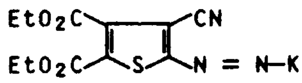

Tabelle 4:

| Bsp. Nr. | K | Nuance auf PES |
|---|---|---|
| 59 | 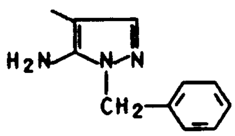 | orange |
| 60 | 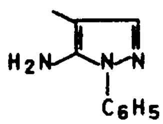 | gelborange |
| 61 | 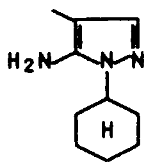 | orange |
| 62 | 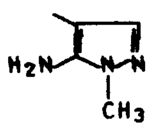 | orange |
| 63 | 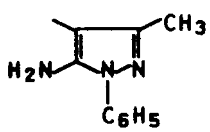 | orange |
| 64 | 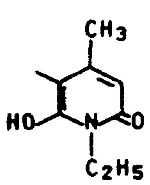 | gelb |
| 65 | 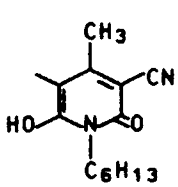 | goldgelb |

Tabelle 4: (Forts.)

| Bsp. Nr. | K | Nuance auf PES |
|---|---|---|
| 66 | 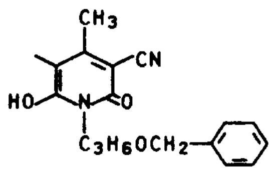 | goldgelb |
| 67 | 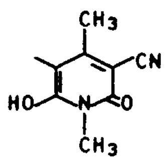 | gelb |
| 68 | 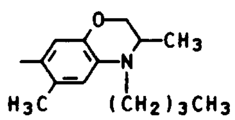 | blau |
| 69 | 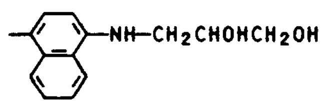 | blau |
| 70 | 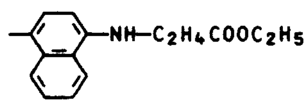 | blau |
| 71 | 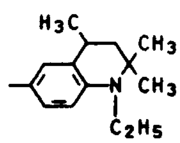 | blau |
| 72 | 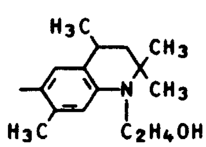 | blau |
| 73 | 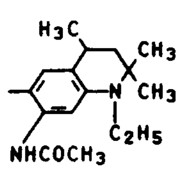 | blau |

Die Farbstoffe der Tabelle 5 entsprechen der Formel

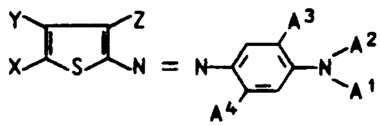

Tabelle 5:

| Bsp. Nr. | X | Y | Z | $A^4$ | $A^3$ | $A^2$ | $A^1$ | Nuance auf PES |
|---|---|---|---|---|---|---|---|---|
| 74 | $CO_2Et$ | $CO_2Et$ | CN | $NHCOCH_3$ | H | $C_2H_5$ | $C_2H_5$ | blauviolett |
| 75 | $CO_2Et$ | $CO_2Et$ | CN | $NHCOCH_2OCH_3$ | H | $C_2H_5$ | $C_2H_5$ | blauviolett |
| 76 | $CO_2Et$ | $CO_2Et$ | CN | $CH_3$ | H | $C_4H_9$ | $C_4H_9$ | blauviolett |
| 77 | $CO_2Et$ | $CO_2Et$ | CN | $NHCOC_2H_5$ | H | $C_2H_5$ | $C_2H_5$ | blauviolett |
| 78 | $CO_2Et$ | $CO_2Et$ | CN | $NHCOCH_3$ | $OCH_3$ | $C_2H_5$ | $C_2H_5$ | blau |
| 79 | $CO_2Et$ | $CO_2Et$ | CN | $NHCOCH_3$ | $OC_2H_5$ | $C_2H_4OCOCH_3$ | $C_2H_4OCOCH_3$ | blau |
| 80 | $CO_2Et$ | $CO_2Et$ | CN | $NHCOCH_3$ | H | $CH_2CH{=}CH_2$ | $CH_2CH{=}CH_2$ | blauviolett |
| 81 | $CO_2Et$ | $CO_2Et$ | CN | $CH_3$ | H | $C_2H_5$ | $C_2H_4OH$ | blauviolett |
| 82 | $CO_2Et$ | $CO_2Et$ | CN | $CH_3$ | H | $C_2H_4OH$ | $C_2H_4OH$ | blauviolett |
| 83 | $CO_2Et$ | $CO_2Et$ | CN | $CH_3$ | $OCH_3$ | $C_2H_4OCOCH_3$ | $C_2H_4OCOCH_3$ | blauviolett |
| 84 | $CO_2Et$ | $CO_2Et$ | CN | H | H | $C_2H_5$ | $C_6H_5$ | violett |
| 85 | $CO_2Et$ | $CO_2Et$ | CN | $NHSO_2CH_3$ | H | $C_2H_5$ | $C_2H_5$ | blauviolett |
| 86 | $CO_2Et$ | $CO_2Et$ | CN | H | $OCH_3$ | $C_2H_5$ | $C_2H_5$ | blauviolett |
| 87 | $CO_2Et$ | $CO_2Et$ | CN | $CH_3$ | H | $C_2H_5$ | $C_2H_4CN$ | violett |
| 88 | $CO_2Et$ | $CO_2Et$ | CN | $NHCO_2C_2H_5$ | H | $C_3H_7$ | $C_3H_7$ | blauviolett |
| 89 | $CO_2Me$ | $CO_2Me$ | CN | $NHCOCH_2Cl$ | H | $C_2H_5$ | $C_2H_5$ | blauviolett |
| 90 | $CO_2Me$ | $CO_2Me$ | CN | $NHCOCH_3$ | $OCH_3$ | $CH_2CH{=}CH_2$ | $C_2H_4CN$ | blau |
| 91 | $CO_2Et$ | CN | CN | $NHCOC_2H_5$ | $CH_3$ | $C_2H_5$ | $C_2H_5$ | blauviolett |
| 92 | $CO_2Et$ | CN | CN | $NHCOCH_3$ | H | $C_2H_4OCH_3$ | $C_2H_4OCH_3$ | blauviolett |
| 93 | $CO_2Et$ | CN | CN | H | H | $C_2H_4CN$ | $C_2H_5$ | violett |
| 94 | $CO_2Me$ | CN | CN | $CH_3$ | H | $C_2H_4OH$ | $C_2H_5$ | violett |
| 95 | CHO | $CO_2Et$ | CN | $NHCOCH_3$ | H | $C_2H_5$ | $C_2H_5$ | blau |
| 96 | CHO | $CO_2Et$ | CN | $NHCOCH_3$ | H | $C_2H_4CN$ | $C_4H_9$ | rotst.blau |
| 97 | CHO | $CO_2Et$ | CN | $CH_3$ | $OCH_3$ | $C_2H_4OCOCH_3$ | $C_2H_4OCOCH_3$ | blau |
| 98 | CHO | $CO_2Et$ | CN | $NHCOCH_2OCH_3$ | H | $C_2H_5$ | $C_2H_5$ | blau |
| 99 | CHO | $CO_2Et$ | CN | $NHCOCH_3$ | H | $CH_2$— 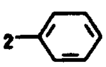 | $C_2H_4CO_2CH_3$ | rotst.blau |
| 100 | CN | $CO_2Et$ | CN | $NHCOCH_3$ | H | $C_2H_4OCH_3$ | $C_2H_5$ | rotst.blau |
| 101 | CN | $CO_2Et$ | CN | $NHCOCH_3$ | $OC_2H_5$ | $CH_2CH{=}CH_2$ | $CH_2CH{=}CH_2$ | blau |
| 102 | $NO_2$ | $CO_2Et$ | CN | $NHCOCH(CH_3)_2$ | H | $C_3H_7$ | $C_3H_7$ | grünst.blau |
| 103 | $NO_2$ | $CO_2Et$ | CN | $CH_3$ | H | $C_2H_4CN$ | $C_2H_5$ | blau |
| 104 | Br | $CO_2Et$ | CN | $NHCOCH_3$ | H | $C_2H_5$ | $C_2H_5$ | rot |

Beispiel 105

13,4 g 2-Amino-3-cyano-4,5-diethoxycarbonylthiophen wurden in einem Gemisch aus 100 ml 100 %iger Essigsäure und 50 g 96 %iger Schwefelsäure eiskalt verrührt und tropfenweise mit 16 g 40 %iger Nitrosylschwefelsäure versetzt. Nach dreistündigem Rühren bei 0 bis 5 °C ließ man die Diazoniumsalzlösung auf ein Gemisch ausfließen, das durch Auflösen von 12,5 g 2-(2-Butoxyethylamino)-3-cyano-4-methyl-5-aminopyridin in 100 ml Wasser und 10 ml 30 %iger Salzsäure und Kühlung mit 150 g Eis bereitet wurde. Kurz danach war das Diazoniumsalz aufgebraucht.

Man saugte die Farbstoffdispersion ab, wusch das Nutschgut neutral und trocknete bei 80 °C.

Der erhaltene Farbstoff der Formel

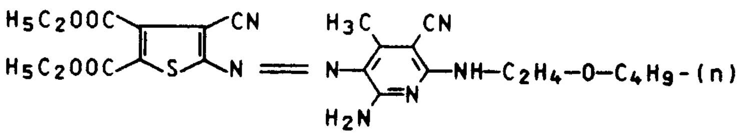

färbt Polyestermaterialien in brillanten Rottönen mit sehr guten Gebrauchsechtheiten.

Die in Tabelle 6 aufgeführten Farbstoffe der Formel

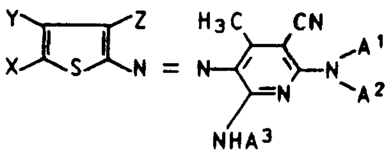

werden in analoger Weise erhalten.

Tabelle 6:

| Bsp. Nr. | X | Y | Z | $A^1$ | $A^2$ | $A^3$ | Nuance auf PES |
|---|---|---|---|---|---|---|---|
| 106 | $CO_2Et$ | $CO_2Et$ | CN | H | $C_2H_4OCH_3$ | $C_2H_4OCH_3$ | rot |
| 107 | $CO_2Et$ | $CO_2Et$ | CN | H | $CH{-}CH_2OCH_3$ \| $CH_3$ | H | rot |
| 108 | $CO_2Et$ | $CO_2Et$ | CN | H | $C_3H_6OC_4H_8OH$ | H | rot |
| 109 | $CO_2Et$ | $CO_2Et$ | CN | H | $C_3H_6OC_4H_8OCOC_2H_5$ | H | rot |
| 110 | $CO_2Et$ | $CO_2Et$ | CN | H | $C_3H_6OC_2H_4OC_2H_5$ | H | rot |
| 111 | $CO_2Et$ | $CO_2Et$ | CN | H | $C_3H_6OC_2H_4O$– 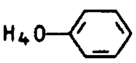 | H | rot |
| 112 | $CO_2Et$ | $CO_2Et$ | CN | H | $C_3H_6OCH_3$ | $C_3H_6OCH_3$ | rot |
| 113 | $CO_2Et$ | $CO_2Et$ | CN | $CH_3$ | $C_2H_4OCH_3$ | $C_2H_4OCH_3$ | rot |
| 114 | $CO_2Et$ | $CO_2Et$ | CN | $C_2H_5$ | $C_2H_5$ | $C_3H_6OCH_3$ | rot |
| 115 | CHO | $CO_2Et$ | CN | H | $C_2H_4OCH_3$ | $C_2H_4OCH_3$ | blaust. rot |
| 116 | $COCH_3$ | $CO_2Et$ | CN | H | $C_3H_6OC_4H_8OH$ | H | blaust. rot |
| 117 | CN | $CO_2Et$ | CN | H | $C_3H_6OC_4H_8OCOCH_3$ | H | blaust. rot |

## Patentansprüche

**1.** Thiophenazofarbstoffe der Formel I

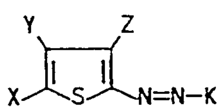

(I),

in der

X Carboxyl, Cyano, Nitro, Chlor, Brom, $C_1$-$C_{10}$-Alkanoyl, gegebenenfalls durch Cyano, $C_1$-$C_{12}$-Alkyl, Chlor, Brom oder Nitro substituiertes Benzoyl, $C_1$-$C_4$-Alkylsulfonyl, gegebenenfalls durch Cyano, $C_1$-$C_{12}$-Alkyl, Chlor, Brom oder Nitro substituiertes Phenylsulfonyl oder den Rest CO-OR[1] oder

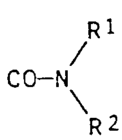

,

wobei $R^1$ und $R^2$ gleich oder verschieden sind und unabhängig voneinander jeweils für gegebenenfalls durch Hydroxy, $C_1$-$C_4$-Alkoxy, Phenoxy oder Phenyl substituiertes $C_1$-$C_{12}$-Alkyl, $C_5$-$C_7$-Cycloalkyl, $C_3$-$C_4$-Alkenyl, gegebenenfalls durch Cyano, $C_1$-$C_{12}$-Alkyl, Chlor, Brom oder Nitro substituiertes Phenyl oder zusammen mit dem sie verbindenden Stickstoffatom für einen 5- oder 6-gliedrigen, gesättigten heterocyclischen Rest stehen, und $R^2$ zusätzlich auch die Bedeutung von Wasserstoff besitzen kann,

Y Carboxyl, Cyano, den Rest CO-$OR^1$ oder

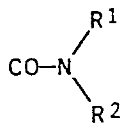

,

wobei $R^1$ und $R^2$ jeweils die obengenannte Bedeutung besitzen, oder zusammen mit dem Substituenten X den Rest

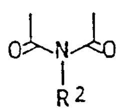

oder

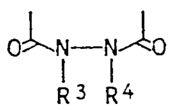

,

wobei $R^2$ die obengenannte Bedeutung besitzt und $R^3$ und $R^4$ gleich oder verschieden sind und unabhängig voneinander jeweils für Wasserstoff, gegebenenfalls durch Hydroxy, $C_1$-$C_4$-Alkoxy, Phenoxy oder Phenyl substituiertes $C_1$-$C_{12}$-Alkyl, $C_5$-$C_7$-Cycloalkyl oder gegebenenfalls durch Cyano, $C_1$-$C_{12}$-Alkyl, Chlor, Brom oder Nitro substituiertes Phenyl stehen,

Z Carboxyl, Cyano, $C_1$-$C_{10}$-Alkanoyl, gegebenenfalls durch Cyano, $C_1$-$C_{12}$-Alkyl, Chlor, Brom oder Nitro substituiertes Benzoyl, $C_1$-$C_4$-Alkylsulfonyl, gegebenenfalls durch Cyano, $C_1$-$C_{12}$-Alkyl, Chlor, Brom oder Nitro substituiertes Phenylsulfonyl oder den Rest CO-$OR^1$ oder

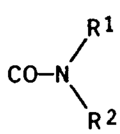

,

wobei $R^1$ und $R^2$ jeweils die obengenannte Bedeutung besitzen, und

K den Rest einer Kupplungskomponente bedeuten,

mit der Maßgabe, daß die Reste X, Y und Z nicht gleichzeitig für Cyano oder den Rest CO-$OR^1$, in dem $R^1$ die oben genannte Bedeutung besitzt, stehen.

**2.** Thiophenazofarbstoffe gemäß Anspruch 1, dadurch gekennzeichnet, daß X Cyano, Nitro, Chlor, Brom, $C_1$-$C_5$-Alkanoyl oder den Rest CO-$OR^1$ in dem $R^1$ für $C_1$-$C_4$-Alkyl oder Phenyl steht, Y und Z gleich oder verschieden sind und unabhängig voneinander jeweils Cyano oder den Rest CO-$OR^1$, in dem $R^1$ für $C_1$-$C_4$-Alkyl steht, und K den Rest einer Kupplungskomponente der Anilin-, Aminopyrazol-, Diaminopyridin-, Pyridon-, Thiazol- oder Thiophenreihe bedeuten.

**3.** Thiophenazofarbstoffe gemäß Anspruch 1, dadurch gekennzeichnet, daß X Cyano, Nitro, Formyl, Acetyl oder den Rest CO-$OR^1$, in dem $R^1$ für $C_1$-$C_4$-Alkyl steht, Y und Z gleich oder verschieden sind und unabhängig voneinander jeweils Cyano oder den Rest CO-$OR^1$, in dem $R^1$ für $C_1$-$C_4$-Alkyl steht, und K den Rest einer Kupplungskomponente der Diaminopyridin-, Thiazol- oder Thiophenreihe bedeuten.

**4.** Verwendung der Thiophenazofarbstoffe gemäß Anspruch 1 zum Färben von Fasermaterial.

## Claims

**1.** A thiopheneazo dye of the formula I

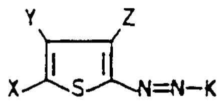 (I)

where X is carboxyl, cyano, nitro, chlorine, bromine, $C_1$-$C_{10}$-alkanoyl, unsubstituted or cyano-, $C_1$-$C_{12}$-alkyl-, chlorine-, bromine- or nitro-substituted benzoyl, $C_1$-$C_4$-alkylsulfonyl, unsubstituted or cyano-, $C_1$-$C_{12}$-alkyl-, chlorine-, bromine- or nitro-substituted phenylsulfonyl or the radical CO-OR$^1$ or

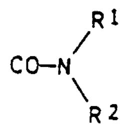 ,

where $R^1$ and $R^2$ are identical or different and are each independently of the other unsubstituted or hydroxyl-, $C_1$-$C_4$-alkoxy-, phenoxy or phenyl-substituted $C_1$-$C_{12}$-alkyl, or is $C_5$-$C_7$-cycloalkyl, $C_3$-$C_4$-alkenyl, unsubstituted or cyano-, $C_1$-$C_{12}$-alkyl-, chlorine-, bromine- or nitro-substituted phenyl or is together with the nitrogen atom linking them a 5- or 6-membered saturated heterocyclic radical, and $R^2$ can additionally be hydrogen, Y is carboxyl, cyano, the radical CO-OR$^1$ or

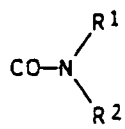 ,

where $R^1$ and $R^2$ each have the abovementioned meanings, or together with the substituent X the radical

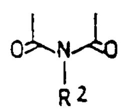 or 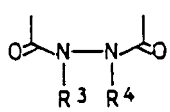

where $R^2$ has the abovementioned meanings and $R^3$ and $R^4$ are identical or different and are each independently of the other hydrogen, unsubstituted or hydroxyl-, $C_1$-$C_4$-alkoxy-, phenoxy- or phenyl-substituted $C_1$-$C_{12}$-alkyl, $C_5$-$C_7$-cycloalkyl or unsubstituted or cyano-, $C_1$-$C_{12}$-alkyl-, chlorine-, bromine- or nitro-substituted phenyl, Z is carboxyl, cyano, $C_1$-$C_{10}$-alkanoyl, unsubstituted or cyano-, $C_1$-$C_{12}$-alkyl-, chlorine-, bromine- or nitro-substituted benzoyl, $C_1$-$C_4$-alkylsulfonyl, unsubstituted or cyano-, $C_1$-$C_{12}$-alkyl-, chlorine-, bromine- or nitro-substituted phenylsulfonyl or the radical CO-OR$^1$ or

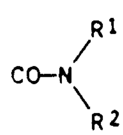 ,

where $R^1$ and $R^2$ each have the abovementioned meanings, and K is the radical of a coupling component, with the proviso that the radicals X, Y and Z are not simultaneously cyano or the radical CO-OR$^1$ where $R^1$ has the abovementioned meanings.

**2.** A thiopheneazo dye as claimed in claim 1, wherein X is cyano, nitro, chlorine, bromine, $C_1$-$C_5$-alkanoyl or CO-OR$^1$ where $R^1$ is $C_1$-$C_4$-alkyl or phenyl, Y and Z are identical or different and are each independently of the other cyano or CO-OR$^1$ where $R^1$ is $C_1$-$C_4$-alkyl, and K is the radical of a coupling component from the aniline, aminopyrazole, diaminopyridine, pyridone, thiazole or thiophene series.

3. A thiopheneazo dye as claimed in claim 1, wherein X is cyano, nitro, formyl, acetyl or CO-OR[1] where $R^1$ is $C_1$-$C_4$-alkyl, Y and Z are identical or different and are each independently of the other cyano or CO-OR[1] where $R^1$ is $C_1$-$C_4$-alkyl, and K is the radical of a coupling component of the diaminopyridine, thiazole or thiophene series.

4. Use of a thiopheneazo dye as claimed in claim 1 for dyeing fiber material.

**Revendications**

1. Colorants azoïques de la série du thiophène de formule I

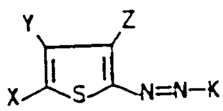

(I),

dans laquelle

X représente un radical carboxyle, cyano, nitro, chloro, bromo, alcanoyle en $C_1$-$C_{10}$, benzoyle éventuellement substitué par un groupement cyano, alkyle en $C_1$-$C_{12}$, par un atome de chlore ou de brome ou par un groupement nitro, $C_1$-$C_4$-alkylsulfonyle, phénylsulfonyle éventuellement substitué par un groupement cyano, alkyle en $C_1$-$C_{12}$, par un atome de chlore ou de brome ou par un groupement nitro, ou le reste CO-$R^1$ ou

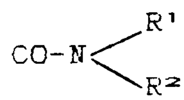

,

$R^1$ et $R^2$ étant identiques ou différents et étant mis chacun, indépendamment l'un de l'autre, pour un radical alkyle en $C_1$-$C_{12}$ éventuellement substitué par un groupement hydroxy, alcoxy en $C_1$-$C_4$, phénoxy ou phényle, pour un radical cycloalkyle en $C_5$-$C_7$, alcényle en $C_3$-$C_4$, phényle éventuellement substitué par un groupement cyano, alkyle en $C_1$-$C_{12}$, par un atome de chlore ou de brome ou par un groupement nitro, ou étant mis ensemble, avec l'atome d'azote qui les relie, pour un reste hétérocyclique saturé penta- ou hexagonal, et $R^2$ pouvant en plus avoir aussi la signification d'un atome d'hydrogène,

Y représente un radical carboxyle, cyano, le reste CO-OR[1] ou

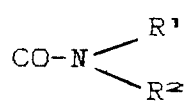

,

$R^1$ et $R^2$ ayant chacun la signification susmentionnée, ou il représente, avec le substituant X, le reste

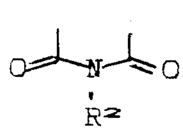

ou

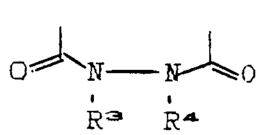

,

$R^2$ ayant la signification susmentionnée et $R^3$ et $R^4$ étant identiques ou différents et étant mis chacun, indépendamment l'un de l'autre, pour un atome d'hydrogène, pour un radical alkyle en $C_1$-$C_{12}$ éventuellement substitue par un groupement hydroxy, alcoxy en $C_1$-$C_4$, phénoxy ou phényle, pour un radical cycloalkyle en $C_5$-$C_7$ ou pour un radical phényle éventuellement substitué par un groupement cyano, alkyle en $C_1$-$C_{12}$, par un atome de chlore ou de brome ou par un groupement nitro,

Z représente un radical carboxyle, cyano, alcanoyle en $C_1$-$C_{10}$, benzoyle éventuellement substitué par un groupement cyano, alkyle en $C_1$-$C_{12}$, par un atome de chlore ou de brome ou par un groupement nitro, $C_1$-$C_4$-alkylsulfonyle, phénylsulfonyle éventuellement substitué par un groupement cyano, alkyle en $C_1$-$C_{12}$, par un atome de chlore ou de brome ou par un groupement nitro, ou le reste CO-$R^1$ ou

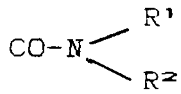,

$R^1$ et $R^2$ ayant chacun la signification susmentionnée, et

K représente le reste d'un composant de copulation,

étant spécifié que les restes X, Y et Z ne sont pas mis simultanément pour un groupement cyano ou pour le reste CO-$OR^1$ dans lequel $R^1$ a la signification susmentionnée.

**2.** Colorants azoïques de la série du thiophène selon la revendication 1, caractérisés en ce que X représente un radical cyano, nitro, chloro, bromo, alcanoyle en $C_1$-$C_6$ ou le reste CO-$OR^1$ dans lequel $R^1$ est mis pour un radical alkyle en $C_1$-$C_4$ ou phényle, Y et Z sont identiques ou différents et représentent chacun, indépendamment l'un de l'autre, un radical cyano ou le reste CO-$OR^1$ dans lequel $R^1$ est mis pour un radical alkyle en $C_1$-$C_4$, et K représente le reste d'un composant de copulation de la série de l'aniline, de l'aminopyrazole, de la diaminopyridine, de la pyridone, du thiazole ou du thiophène.

**3.** Colorants azoïques de la série du thiophène selon la revendication 1, caractérisés en ce que Y représente un radical cyano, nitro, formyle, acétyle ou le reste CO-$OR^1$ dans lequel $R^1$ est mis pour un radical alkyle en $C_1$-$C_4$, Y et Z sont identiques ou différents et représentent chacun, indépendamment l'un de l'autre, un radical cyano ou le reste CO-$OR^1$ dans lequel $R^1$ est mis pour un radical alkyle en $C_1$-$C_4$, et K représente le reste d'un composant de copulation de la série de la diaminopyridine, du thiazole ou du thiophène.

**4.** Utilisation des colorants azoïques de la série du thiophène selon la revendication 1 pour la teinture de matières fibreuses.